(19) Europäisches Patentamt / European Patent Office / Office européen des brevets

(11) **EP 2 138 541 B2**

(12) **NEW EUROPEAN PATENT SPECIFICATION**
After opposition procedure

(45) Date of publication and mention
of the opposition decision:
**04.03.2020 Bulletin 2020/10**

(45) Mention of the grant of the patent:
**02.08.2017 Bulletin 2017/31**

(21) Application number: **08711586.1**

(22) Date of filing: **19.02.2008**

(51) Int Cl.:
*C08L 53/02* (2006.01)     *C08J 5/18* (2006.01)
*C08L 51/04* (2006.01)     *C08L 25/06* (2006.01)
*C08F 297/04* (2006.01)

(86) International application number:
**PCT/JP2008/052765**

(87) International publication number:
**WO 2008/117591 (02.10.2008 Gazette 2008/40)**

(54) **MOLDING MATERIAL FOR MD SHRINK AND MD SHRINK FILM**

FORMMASSE FÜR MD-SCHRUMPF UND MD-SCHRUMPFFOLIE

MATIÈRE DE MOULAGE POUR UN RETRAIT DANS LE SENS MACHINE ET UN FILM À RETRAIT DANS LE SENS MACHINE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.03.2007 JP 2007084226**

(43) Date of publication of application:
**30.12.2009 Bulletin 2009/53**

(73) Proprietor: **Denka Company Limited
Tokyo 103-8338 (JP)**

(72) Inventors:
• **TOYA, Hideki
Ichihara-shi
Chiba 290-8588 (JP)**
• **SATO, Eiji
Ichihara-shi
Chiba 290-8588 (JP)**

• **MATSUI, Masamitsu
Ichihara-shi
Chiba 290-8588 (JP)**

(74) Representative: **Hartz, Nikolai
Wächtershäuser & Hartz
Patentanwaltspartnerschaft mbB
Weinstrasse 8
80333 München (DE)**

(56) References cited:
EP-A1- 1 333 043          WO-A2-2008/013542
DE-A1-102005 001 637      JP-A- 08 225 712
JP-A- 2003 033 968        JP-A- 2003 238 703
JP-A- 2003 285 369        JP-A- 2004 182 944
JP-A- 2004 331 727        JP-A- 2006 176 559
US-A- 6 107 411           US-A1- 2005 089 702

EP 2 138 541 B2

**Description**

TECHNICAL FIELD

The present invention relates to a material for a machine direction (MD) shrink film.

BACKGROUND ART

Vinyl chloride was previously used for a heat shrink film to be applied to shrink packaging, but a block copolymer of a vinyl aromatic hydrocarbon and a conjugated diene, or a resin composition thereof has been used in recent years.

A general production method for the heat shrink film is a method of extruding a material into the form of a sheet once and stretching the sheet to about five to six times the original size in a direction perpendicular to a flow direction of the sheet (i.e., in the TD direction) (TD: Transverse Direction, or lateral direction) with use of an apparatus called a tenter (Patent Document 1). On the other hand, there is another method of once cooling the sheet with cast rolls in the same step as the extrusion step, and then stretching the sheet in the flow direction (i.e. in the MD direction) (MD: Machine Direction, or longitudinal direction) into a film by two rolls located downstream, temperature-controlled, and rotated with a large speed difference between them.

The heat shrink film obtained by preferentially stretching the sheet in the film flow direction as described above is called an MD shrink film. This method has the following problem: if neck-in is significant in casting the sheet as extruded from a T-die, the resultant film comes to have a large difference in thickness in the width direction of the film and it leads to a failure in obtaining the MD shrink film with good thickness accuracy.

Patent Document 1: JP-A-2003-285369

Patent Documents EP1333043, US6107411, US20050089702, WO2008013542, disclose block copolymer compositions and films made therefrom.

DISCLOSURE OF THE INVENTION

OBJECT TO BE ACCOMPLISHED BY THE INVENTION

In light of the circumstances as described above, an object of the present invention is to provide a material for an MD shrink film with good shrinking performance and thickness accuracy, and a film formed using the material.

MEANS TO ACCOMPLISH THE OBJECT

Namely, the present invention resides in the following aspects, as disclosed in the claims.

EFFECTS OF THE INVENTION

Since the MD shrink films using the materials for the MD shrink film according to the present invention are excellent in the thickness accuracy and heat shrinking property, the films are suitably applicable to various packaging films such as labels with various prints, and cap seals.

BEST MODE FOR CARRYING OUT THE INVENTION

Now, the present invention will be described in detail.

Components (a) to (c) making up the heat shrink film of the present invention are as follows.

Examples of the vinyl aromatic hydrocarbon used for production of the block copolymer (I) of the vinyl aromatic hydrocarbon and the conjugated diene making up the component (a) used in the present invention include styrene, o-methylstyrene, p-methylstyrene, p-tert-butylstyrene, 2,4-dimethylstyrene, 2,5-dimethylstyrene, $\alpha$-methylstyrene, vinyl-naphthalene, vinylanthracene, and styrene is particularly preferable.

Examples of the conjugated diene used for the production of the block copolymer (I) include 1,3-butadiene, 2-methyl-1,3-butadiene (isoprene), 2,3-dimethyl-1,3-butadiene, 1,3-pentadiene, 1,3-hexadiene, and 1,3-butadiene and isoprene are particularly preferable.

There are no particular restrictions on the structure of the block copolymer (I) and on the structure of each block. The structure of the block copolymer may be, for example, a linear or star-form block copolymer comprising polymer blocks composed mainly of the vinyl aromatic hydrocarbon and polymer blocks composed mainly of the conjugated diene. Furthermore, each block making up the block copolymer may be a block composed of only monomer units of the vinyl aromatic hydrocarbon, a block composed of monomer units of the vinyl aromatic hydrocarbon and the conjugated diene, or a block composed of only monomer units of the conjugated diene.

Moreover, when a block is composed of monomer units of the vinyl aromatic hydrocarbon and the conjugated diene, the vinyl aromatic hydrocarbon copolymerized in the block may be distributed uniformly (at random) or taperingly (gradually reducing) fashion in the polymer. Among others, the block is preferably a random block section in which a constitutional ratio of monomer units of the vinyl aromatic hydrocarbon and the conjugated diene is uniform, and in which the ratio (mass ratio) of monomer units of the vinyl aromatic hydrocarbon and monomer units of the conjugated diene is preferably from 80 to 95/5 to 20, more preferably from 83 to 93/7 to 17. The block copolymer (I) preferably has at least one random block as described above.

Next, the production of the block copolymer (I) as described above will be described.

The block copolymer (I) can be produced by polymerizing monomers of the vinyl aromatic hydrocarbon and the conjugated diene in the presence of an organic lithium compound as an initiator in an organic solvent. Examples of the organic solvent to be used include aliphatic hydrocarbons such as butane, pentane, hexane, isopentane, heptane, octane and isooctane; alicyclic hydrocarbons such as cyclohexane, methylcyclohexane and ethylcyclohexane; aromatic hydrocarbons such as benzene, toluene, ethylbenzene and xylene.

The organic lithium compound is a compound having at least one lithium atom bonded in its molecule, and examples thereof include monofunctional organic lithium compounds such as ethyllithium, n-propyllithium, n-butyllithium, sec-butyllithium and tert-butyllithium; polyfunctional organic lithium compounds such as hexamethylene dilithium, butadienyl dilithium and isoprenyl dilithium.

The vinyl aromatic hydrocarbon and the conjugated diene to be used in the present invention may be selected from those listed above, and one or two or more of them may be selected for each component and used for the polymerization. In living anion polymerization using the above-mentioned organic lithium compound as an initiator, almost all of the vinyl aromatic hydrocarbon and the conjugated diene supplied to the polymerization reaction will be converted to the polymer.

The molecular weight of the block copolymer (I) can be controlled by an amount of the initiator to be added to a total amount of monomers. Furthermore, a molecular weight distribution (Mw/Mn) of (I) can be controlled so that the molecular weight distribution (Mw/Mn) can be broadened over 1.2, for example, by (i) a method of using the above-mentioned polyfunctional organic lithium compound in the production of (I), (ii) a method of producing plural block copolymers by adding a deactivating agent such as water in an amount not to deactivate all the living anions, on the way of the production of (I), or (iii) a method of blending block polymers (I) with different molecular weights.

The block copolymer thus obtained is inactivated by adding a polymerization terminator such as water, alcohol or carbon dioxide in an amount sufficient to inactivate active terminals. A method for recovering the block copolymer from the resultant block copolymer solution may be one of optional methods such as a method of putting the solution into a poor solvent such as methanol to precipitate the polymer, a method of evaporating the solvent with heating rolls to precipitate the polymer (drum drier method), a method of concentrating the solution with a concentrator and then removing the solvent with a vented extruder, and a method of dispersing the solution in water and blowing steam thereinto to heat and remove the solvent (steam stripping method).

The vinyl aromatic hydrocarbon polymer (II) making up the component (b) used in the present invention may be a homopolymer of one of the vinyl aromatic hydrocarbons listed above, or a copolymer of two or more of them. A particularly common one is polystyrene.

The copolymer (III) of the vinyl aromatic hydrocarbon and (meth)acrylic acid making up the component (b) used in the present invention can be obtained by polymerizing the above-mentioned vinyl aromatic hydrocarbon and (meth)acrylic acid, and the polymerization can be carried out by selecting and using one or two or more kinds for each monomer.

There are no particular restrictions on the (meth)acrylic acid, but acrylic acid or methacrylic acid is preferable.

The copolymer (IV) of the vinyl aromatic hydrocarbon and the (meth)acrylate making up the component (b) used in the present invention can be obtained by polymerizing the above-mentioned vinyl aromatic hydrocarbon and the (meth)acrylate, and the polymerization can be carried out by selecting and using one or two or more kinds for each monomer.

There are no particular restrictions on the (meth)acrylate, but preferable examples thereof include methyl acrylate, ethyl acrylate, acrylic acid-n-butyl (or n-butyl acrylate), isobutyl acrylate, hexyl acrylate, (2-ethyl)hexyl acrylate, methacrylic acid methyl (or methyl methacrylate), ethyl methacrylate, butyl methacrylate, (2-hydroxy)ethyl methacrylate.

The copolymer (III) or (IV) can be obtained by polymerizing a monomer mixture of the vinyl aromatic hydrocarbon and (meth)acrylic acid, or a monomer mixture of the vinyl aromatic hydrocarbon and the (meth)acrylate, in a mass ratio of 5 to 99:95 to 1, preferably 40 to 99:60 to 1, further preferably 70 to 99:30 to 1.

The rubber-modified styrene polymer (V) making up the component (c) used in the present invention can be obtained by polymerizing a mixture comprising a vinyl aromatic hydrocarbon or a monomer copolymerizable therewith, and one of various elastomers. The vinyl aromatic hydrocarbon may be one of those described above and the monomer copolymerizable therewith may, for example, be (meth)acrylic acid, (meth)acrylate. Furthermore, the elastomer may, for example, be butadiene rubber, styrene-butadiene rubber, styrene-butadiene block copolymer elastomer, chloroprene rubber, natural rubber. The rubber-modified styrene polymer thus obtained is preferably a high impact polystyrene (HIPS) obtained from styrene and butadiene rubber, because it is easy to control the particle sizes of the rubber.

Various additives may be incorporated in the respective polymers (I) to (V) and in the material for the MD shrink film obtained by mixing and kneading them, as the case requires. Examples of the additives include various stabilizers, processing assistances, weather resistance improving agents, softening agents, plasticizers, anti-fogging agents, mineral oils, fillers, pigments, flame retardants, lubricants.

Examples of the above stabilizers include phenol type antioxidants such as 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate and n-octadecyl-3-(4-hydroxy-3,5-di-tert-butylphenyl)propionate; phosphorus type antioxidants such as tris(2,4-di-tert-butylphenyl)phosphite.

As the processing assistances, weather resistance improving agents, softening agents, plasticizers, anti-fogging agents, mineral oils, fillers, pigments, flame retardants may be used.

Furthermore, examples of the lubricants include methylphenylpolysiloxane, a fatty acid, a fatty acid glycerol ester, a fatty acid amide, a hydrocarbon type wax.

The material for the MD shrink film of the present invention can be obtained by mixing and kneading (I) to (V) making up the components (a) to (c). There are no particular restrictions on the mixing and kneading method; for example, a Henschel mixer, a ribbon blender, a V blender may be used for dry blending and the composition may be further melted and pelletized with an extruder.

The material for the MD shrink film of the present invention is obtained as a resin composition by blending and kneading 100 parts by mass of (I) making up the component (a) and from 0.5 to 3 parts by mass, preferably from 0.8 to 2 parts by mass of (V) making up the component (c). The molecular weight distribution (Mw/Mn) of the material for the MD shrink film might exceed 1.2 by this blending, but it is preferable to preliminarily control the molecular weight distribution (Mw/Mn) of the block copolymer (I) itself so as to exceed 1.2 by any of the aforementioned methods.

If (V) making up the component (c) is less than 0.5 part by mass, the MD shrink film thus obtained is likely to undergo blocking and it is not suitable for actual use. On the other hand, if it exceeds 3 parts by mass, the MD shrink film thus obtained fails to have sufficient transparency.

Furthermore, the material for the MD shrink film of the present invention is obtained as a resin composition by preparing a mixture by blending and kneading (I) making up the component (a) and at least one of from (II) to (IV) making up the component (b) in a proportion of from less than 100% by mass and at least 50% by mass, preferably from 95 to 55% by mass, to more than 0 and at most 50% by mass, preferably from 5 to 45% by mass, and by blending and kneading the mixture with the component (c) in an amount of from 0.5 to 3 parts by mass, preferably from 0.8 to 2 parts by mass relative to 100 parts by mass of the mixture. The molecular weight distribution (Mw/Mn) of the resin composition exceeds 1.2 by this blending and kneading, but it is necessary to make the molecular weight distribution (Mw/Mn) of the resin composition exceed 1.2 by appropriately selecting the respective components.

If the component (b) in the mixture exceeds 50% by mass, the transparency of the MD shrink film thus obtained might be insufficient or the heat shrinking property thereof might be insufficient. Furthermore, if (V) making up the component (c) is less than 0.5 part by mass, the MD shrink film thus obtained is likely to undergo blocking and it is not suitable for practical use. On the other hand, if it exceeds 3 parts by mass, the transparency of the MD shrink film thus obtained must be insufficient.

The molecular weight distribution (Mw/Mn) of the resin composition constituting the material for the MD shrink film thus obtained exceeds 1.2, and is preferably at least 1.22, particularly preferably at least 1.25. If the molecular weight distribution is less than 1.2, neck-in will be significant when the sheet is extruded from a die by the T-die method. It will degrade the thickness accuracy of the film after longitudinally stretched. Furthermore, the molecular weight distribution described above is normally preferably at most 2.2, particularly preferably at most 1.5.

Moreover, a content of monomer units of the conjugated diene relative to the entire material for the MD shrink film of the present invention is from 10 to 30% by mass, preferably from 12 to 27% by mass. When the content of the conjugated diene exceeds 30% by mass, the rigidity of the MD shrink film obtained is insufficient; when it is less than 10% by mass, the heat shrinking property is insufficient, whereby the film is not suitable for practical use.

The heat shrink film of the present invention can be obtained by using the above-mentioned material and stretching a sheet or a film extruded by the T-die method, in the longitudinal direction and, if necessary, in the lateral direction.

The stretching in the longitudinal direction can be realized by a speed difference between a low-speed roll and a high-speed roll. There are no particular restrictions on a stretching ratio, but it is preferably from 1.5 to 6 times, more preferably from 2 to 5 times. If it is less than 1.5 times, the heat shrinkage rate tends to be inadequate, and if it exceeds 6 times, the stretching tends to be difficult, which is undesirable.

The stretching in the lateral direction can be conducted by using a tenter if it is necessary to suppress the expanding in the lateral direction due to shrinkage in the longitudinal direction. There are no particular restrictions on a ratio of the stretching, but it is preferably at most two times, more preferably at most 1.8 times. If it exceeds two times, the heat shrinkage rate in the lateral direction becomes too large, which is undesirable. It is essential that the shrinkage rate resulting from the stretching be larger in the longitudinal direction than in the lateral direction.

In a case where such a film is used as a heat shrink label or a wrapping material, the heat shrinkage rate is preferably at least 30%, more preferably at least 40% at 100°C for ten seconds. If the heat shrinkage rate is less than 30%, a high temperature will be required for shrinkage, whereby an adverse effect could be given to an article to be covered. Furthermore, a natural shrinkage rate is preferably at most 1.5% at 40°C for seven days. In addition, a thickness of the film is preferably from 10 to 150 $\mu$m, more preferably from 25 to 100 $\mu$m.

The heat shrink film using the material for the MD shrink film of the present invention is particularly preferably used for heat shrink labels, heat shrink cap seals, and in addition, the film may also be appropriately used as a packaging film.

EXAMPLES

Now, the present invention will be explained in detail with reference to examples. However, it should be understood that the present invention is by no means construed as restricted to the examples below.

REFERENCE EXAMPLE 1

(1) 500 kg of cyclohexane was charged into a stainless steel reaction vessel.
(2) 8.0 kg of styrene monomer was added in the vessel and 1,200 mL of n-butyllithium (10% by mass cyclohexane solution) was added to conduct polymerization at an internal temperature of 30°C under stirring.
(3) While maintaining the internal temperature at 80°C, styrene monomer and 1,3-butadiene monomer were simultaneously added at constant addition rates of 63.8 kg/h and 8.5 kg/h, respectively, up to respective total amounts of 150.0 kg and 20.0 kg. After completion of the addition, the condition was maintained for a sufficient period of time.
(4) After 1,3-butadiene gas was completely consumed, 14.0 kg of 1,3-butadiene monomer was added at once to continue polymerization thereof while maintaining the internal temperature at 75°C.
(5) 8.0 kg of styrene monomer was further added at once to complete the polymerization (polymerization solution A).
(6) 500 kg of cyclohexane was charged into a stainless steel reaction vessel.
(7) 8.0 kg of styrene monomer was added in the vessel and 1,880 mL of n-butyllithium (10% by mass cyclohexane solution) was added to conduct polymerization at an internal temperature of 30°C under stirring.
(8) While maintaining the internal temperature at 80°C, styrene monomer and 1,3-butadiene monomer were simultaneously added at constant addition rates of 63.8 kg/h and 5.5 kg/h, respectively, up to respective total amounts of 150.0 kg and 13.0 kg. After completion of the addition, the condition was maintained for a sufficient period of time.
(9) After 1,3-butadiene gas was completely consumed, 21.0 kg of 1,3-butadiene monomer was added at once to continue polymerization thereof while maintaining the internal temperature at 75°C.
(10) 8.0 kg of styrene monomer was further added at once to complete the polymerization (polymerization solution B).
(11) Then, the polymerization solution A and the polymerization solution B were blended in a mass ratio of 2:1, and the resultant polymerization solution was added in methanol to precipitate a polymer. The resultant polymer was dried to obtain a block copolymer composition 1.

REFERENCE EXAMPLE 2

A polymerization solution C was obtained in the same method as in the case of preparation of the polymerization solution B except that an addition amount of n-butyllithium (10% by mass cyclohexane solution) was changed to 2,400 mL. Then, the polymerization solution A and the polymerization solution C were blended in a mass ratio of 2:1, and the resultant polymerization solution was added in methanol to precipitate a polymer. The resultant polymer was dried to obtain a block copolymer composition 2.

REFERENCE EXAMPLE 3

(1) 500 kg of cyclohexane was charged into a stainless steel reaction vessel.
(2) 4.0 kg of styrene monomer was added in the vessel and 1,200 mL of n-butyllithium (10% by mass cyclohexane solution) was added to conduct polymerization at an internal temperature of 30°C under stirring.

(3) While maintaining the internal temperature at 80°C, styrene monomer and 1,3-butadiene monomer were simultaneously added at constant addition rates of 100.8 kg/h and 12.5 kg/h, respectively, up to respective total amounts of 127.0 kg and 15.7 kg. After completion of the addition, the condition was maintained for a sufficient period of time.

(4) After 1,3-butadiene gas was completely consumed, 32.3 kg of 1,3-butadiene monomer was added at once to continue polymerization thereof while maintaining the internal temperature at 75°C.

(5) 29.0 kg of styrene monomer was further added at once to complete the polymerization (polymerization solution D).

(6) 500 kg of cyclohexane was charged into a stainless steel reaction vessel.

(7) 4.0 kg of styrene monomer was added in the vessel and 1,880 mL of n-butyllithium (10% by mass cyclohexane solution) was added to conduct polymerization at an internal temperature of 30°C under stirring.

(8) While maintaining the internal temperature at 80°C, styrene monomer and 1,3-butadiene monomer were simultaneously added at constant addition rates of 100.8 kg/h and 10.0 kg/h, respectively, up to respective total amounts of 118.8 kg and 11.8 kg. After completion of the addition, the condition was maintained for a sufficient period of time.

(9) After 1,3-butadiene gas was completely consumed, 36.4 kg of 1,3-butadiene monomer was added at once to continue polymerization thereof while maintaining the internal temperature at 75°C.

(10) 29.0 kg of styrene monomer was further added at once to complete the polymerization (polymerization solution E).

(11) Then, the polymerization solution D and the polymerization solution E were blended in a mass ratio of 2:1, and the resultant polymerization solution was added in methanol to precipitate a polymer. The resultant polymer was dried to obtain a block copolymer composition 3.

REFERENCE EXAMPLE 4

A polymerization solution F was obtained in the same manner as in the case of preparation of the polymerization solution B except that an addition amount of n-butyllithium (10% by mass cyclohexane solution) was changed to 1,690 mL. Then, the polymerization solution A and the polymerization solution F were blended in a mass ratio of 2:1, and the resultant polymerization solution was added in methanol to precipitate a polymer. The resultant polymer was dried to obtain a block copolymer composition 4.

REFERENCE EXAMPLE 5

(1) 500 kg of cyclohexane was charged into a stainless steel reaction vessel.

(2) 4.0 kg of styrene monomer was added in the vessel and 1,200 mL of n-butyllithium (10% by mass cyclohexane solution) was added to conduct polymerization at an internal temperature of 30°C under stirring.

(3) While maintaining the internal temperature at 80°C, styrene monomer and 1,3-butadiene monomer were simultaneously added at constant addition rates of 90.0 kg/h and 11.5 kg/h, respectively, up to respective total amounts of 101.6 kg and 13.0 kg. After completion of the addition, the condition was maintained for a sufficient period of time.

(4) After 1,3-butadiene gas was completely consumed, 48.4 kg of 1,3-butadiene monomer was added at once to continue polymerization thereof while maintaining the internal temperature at 75°C.

(5) 33.0 kg of styrene monomer was further added at once to complete the polymerization (polymerization solution G).

(6) The polymerization solution G was added in methanol to precipitate a polymer. The resultant polymer was dried to obtain a block copolymer 1.

REFERENCE EXAMPLE 6

(1) 500 kg of cyclohexane was charged into a stainless steel reaction vessel.

(2) 4.0 kg of styrene monomer was added in the vessel and 1,880 mL of n-butyllithium (10% by mass cyclohexane solution) was added to conduct polymerization at an internal temperature of 30°C under stirring.

(3) While maintaining the internal temperature at 80°C, styrene monomer and 1,3-butadiene monomer were simultaneously added at constant addition rates of 90.0 kg/h and 8.6 kg/h, respectively, up to respective total amounts of 101.0 kg and 9.6 kg. After completion of the addition, the condition was maintained for a sufficient period of time.

(4) After 1,3-butadiene gas was completely consumed, 52.4 kg of 1,3-butadiene monomer was added at once to continue polymerization thereof while maintaining the internal temperature at 75°C.

(5) 33.0 kg of styrene monomer was further added at once to complete the polymerization (polymerization solution H).

(6) Then, the polymerization solution G and the polymerization solution H were blended in a mass ratio of 2:1, and the resultant polymerization solution was added in methanol to precipitate a polymer. The resultant polymer was dried to obtain a block copolymer composition 5.

Table 1 shows properties of the block copolymer compositions in Reference Examples 1 to 5 obtained as described above. In Table 1, St means styrene and Bd means 1,3-butadiene.

TABLE 1

| Component (a) | | St/Bd mass ratio | Mw/Mn |
|---|---|---|---|
| (I) | Reference 1 | 83/17 | 1.21 |
| | Reference 2 | 83/17 | 1.26 |
| | Reference 3 | 76/24 | 1.22 |
| | Reference 4 | 83/17 | 1.16 |
| | Reference 5 | 69/31 | 1.02 |
| | Reference 6 | 69/31 | 1.22 |

EXAMPLES 1 to 8 and COMPARATIVE EXAMPLES 1 to 3

Resin compositions were prepared by mixing a vinyl aromatic hydrocarbon-conjugated diene block copolymer composition or block copolymer (I) making up the component (a) shown in Table 1, a vinyl aromatic hydrocarbon polymer (II), a copolymer (III) of a vinyl aromatic hydrocarbon and (meth)acrylic acid and a copolymer (IV) of a vinyl aromatic hydrocarbon and a (meth)acrylate making up the component (b), shown in Table 2, and a rubber-modified styrene polymer (high impact polystyrene) (V) in respective blending amounts shown in Table 3 (parts by mass) with a Henschel mixer, and then melting and pelletizing the mixture with an extruder.

The high impact polystyrene (V) used was commercially available E640N manufactured by TOYO STYRENE Co., Ltd.

Films were made by forming a sheet of 0.3 mm with sequential biaxially oriented (film) machines at an extruding temperature of 210°C, and stretching the sheet three times in the longitudinal direction (by use of low-speed and high-speed rolls) and 1.5 times in the lateral direction (by use of a tenter) at a stretching temperature as shown in table 3.

TABLE 2

| Component (b) | Polymer | Polymer structure | Proportion of monomer units (% by mass) | |
|---|---|---|---|---|
| (II) | b1 | Polystyrene | Styrene | 100 |
| (IV) | b2 | Styrene-methyl methacrylate copolymer | Styrene | 78 |
| | | | Methyl methacrylate | 22 |
| (IV) | b3 | Styrene-n-butyl acrylate copolymer | Styrene | 80 |
| | | | n-Butyl acrylate | 20 |
| (III) | b4 | Styrene-methacrylic acid copolymer | Styrene | 90 |
| | | | Methacrylic acid | 10 |

**TABLE 3**

| | | | Example 1 | Example 2 | Example 3 | Example 4 | Example 5 | Example 6 | Example 7 | Example 8 | Comp. Ex. 1 | Comp. Ex. 2 | Comp. Ex. 3 |
|---|---|---|---|---|---|---|---|---|---|---|---|---|---|
| Blend | Component (a) | Reference 1 | 100 | | | | | | | | | | |
| | | Reference 2 | | 100 | | | | | | | | | |
| | | Reference 3 | | | 100 | 60 | 80 | 70 | 90 | | 100 | 40 | |
| | | Reference 4 | | | | | | | | | | | |
| | | Reference 5 | | | | | | | | 70 | | | 100 |
| | | Reference 6 | | | | | | | | | | | |
| | Component (b) | b1 | | | | | | | | | | | |
| | | b2 | | | | | | | | | | | |
| | | b3 | | | | | | | | | | | |
| | | b4 | | | | | | | | | | | |
| Evaluation | Component (c) | c | | | | 40 | 20 | 30 | 10 | 30 | | 60 | |
| | Mw/Mn | | 1.21 | 1.26 | 1.22 | 1.50 | 1.37 | 1.43 | 1.29 | 1.23 | 1.16 | 1.64 | 1.22 |
| | Tg (°C) | | 66 | 66 | 67 | 80 | 74 | 66 | 72 | 74 | 66 | 87 | 63 |
| | Stretching Temperature (°C) | | 81 | 81 | 82 | 95 | 89 | 81 | 87 | 89 | 81 | 102 | 78 |
| | MD Tensile Elastic Modulus (MPa) | | 1690 | 1670 | 1110 | 1590 | 1350 | 1410 | 1230 | 1340 | 1710 | 1830 | 920 |
| | MD Heat Shrinkage Rate (%) | | 64 | 63 | 63 | 51 | 58 | 64 | 59 | 57 | 64 | 28 | 65 |
| | Thickness Accuracy | | good | good | good | good | good | good | good | good | poor | good | good |

It should be noted that the properties of the materials and films in the examples and comparative examples were measured and evaluated in accordance with the methods below.

(1) Glass Transition Temperature (Tg)

The glass transition temperature (Tg) of each material for the MD shrink film was obtained from a peak temperature obtained by measuring a loss modulus by a dynamic viscoelasticity method in accordance with the following procedures (a) and (b).

(a) Pellets of each material were heat-pressed under a condition of from 200 to 250°C to prepare a sheet having a thickness of from 0.1 to 0.5 mm.

(b) A test specimen having a suitable size was cut out from the sheet obtained in the above procedure (a), and stored in a 23°C 50%RH room for at least 24 hours, and then the loss modulus of the test specimen was measured with change in temperature by means of the following apparatus A.

Apparatus A: solid viscoelasticity measuring device RSA2 manufactured by Rheometric Scientific Inc. (set temperature range: from room temperature to 130°C, set temperature rise rate: 4°C/min, measuring frequency: 1 Hz)

(2) Tensile Modulus

For the stretched films prepared in the above procedure, the tensile modulus in the MD direction was measured at 23°C by means of a TENSILON universal testing instrument (RTC-1210A) manufactured by A&D Company, Limited in accordance with JIS K6871.

(3) Heat shrinkage rate

Each stretched film prepared in the above procedure was immersed in hot water at 100°C for ten seconds, and the heat shrinkage rate was calculated by the following formula:

$$\text{Heat shrinkage rate (\%)} = \{(L1-L2)/L1\} \times 100,$$

where L1 is the length before immersion (in the stretching direction) and L2 is the length after shrinkage by immersion in hot water at 100°C for 10 seconds (in the stretching direction).

(4) Thickness Accuracy

The thickness of each film thus obtained was measured every 2 cm in the width direction (in the lateral direction) and the evaluation was made based on difference between maximum value and minimum value of thickness as follows.

Good: difference of less than 5 $\mu$m between the maximum and minimum values.
Poor: difference of at least 5 $\mu$m between the maximum and minimum values.

It is evident from the results in Table 3 that the films made by using the materials for the MD shrink film of the present invention are excellent in thickness accuracy.

INDUSTRIAL APPLICABILITY

The present invention provides the material for the MD shrink film with good shrinking performance and thickness accuracy, and the film formed with the material. The film is suitably applicable to a heat shrink label, a heat shrink cap seal, a packaging film, and so on.

**Claims**

1. A machine direction (MD) shrink film obtained from a material for an MD shrink film, wherein said material is a resin composition comprising a mixture of (a) at least one component represented by (I) below and (b) at least one component represented by (II) to (IV) below in a mass ratio of from less than100/0 to 50/50, and (c) a component represented by (V) in an amount of from 0.5 to 3 parts by mass relative to 100 parts by mass of the mixture, wherein a molecular weight distribution (Mw/Mn) of the resin composition exceeds 1.2 and a content of a conjugated diene in monomer units in the resin composition is from 10 to 30% by mass:

(I) a block copolymer of a vinyl aromatic hydrocarbon and a conjugated diene,
(II) a vinyl aromatic hydrocarbon polymer,
(III) a copolymer of a vinyl aromatic hydrocarbon and (meth)acrylic acid,
(IV) a copolymer of a vinyl aromatic hydrocarbon and a (meth)acrylate, and
(V) a rubber-modified styrene polymer;

wherein said MD shrink film is obtained by using said material and stretching a sheet or a film extruded by the T-die method, in a longitudinal direction by a speed difference between a low-speed roll and a high-speed roll with a stretching ratio from 2 to 6 times and in a lateral direction at most 1.8 times using a tenter, and:

wherein the vinyl aromatic hydrocarbon in the block copolymer (I) is styrene, and
wherein the conjugated diene in the block copolymer (I) is 1,3-butadiene, and
wherein the rubber-modified styrene (V) is a high impact polystyrene (HIPS).

2. The MD shrink film according to Claim 1, wherein the block copolymer (I) contains a copolymer having at least one random block section in which a constitutional ratio of monomer units of the vinyl aromatic hydrocarbon and the conjugated diene is uniform and in which the ratio (mass ratio) of monomer units of the vinyl aromatic hydrocarbon and monomer units of the conjugated diene is from 80 to 95/5 to 20.

3. The MD shrink film according to any one of Claims 1 or 2, wherein said MD shrink film is obtained by stretching the sheet or the film extruded by the T-die method in a longitudinal direction by a speed difference between a low-speed roll and a high-speed roll with a stretching ratio from 2 to 5 times.

**Patentansprüche**

1. Maschinenrichtung (MD)-Schrumpffolie, die aus einem Material für eine MD-Schrumpffolie erhalten wird, wobei das Material eine Harzzusammensetzung ist, die eine Mischung aus

(a) wenigstens einem Bestandteil, der durch unten stehendes (I) wiedergegeben wird, und
(b) wenigstens einem Bestandteil, der durch unten stehendes (II) bis (IV) wiedergegeben wird, in einem Massenverhältnis von weniger als 100/0 bis 50/50, und (c) einem Bestandteil, der durch (V) wiedergegeben wird, in einer Menge von 0,5 bis 3 Masseanteilen bezüglich 100 Masseanteilen der Mischung, umfasst, wobei die Molekulargewichtsverteilung ($M_w/M_n$) der Harzzusammensetzung 1,2 übersteigt und der Gehalt an konjugiertem Dien in den Monomereinheiten in der Harzzusammensetzung von 10 bis 30 Masseprozent beträgt:

(I) ein Block-Copolymer eines aromatischen Vinylkohlenwasserstoffs und eines konjugieren Diens,
(II) ein aromatisches Kohlenwasserstoffpolymer,
(III) ein Copolymer eines aromatischen Vinylkohlenwasserstoffs und (Meth)acrylsäure,
(IV) ein Copolymer eines aromatischen Vinylkohlenwasserstoffs und eines (Meth)arcylats, und
(V) ein Kautschuk-modifiziertes Styrolpolymer;

wobei die MD-Schrumpffolie durch Verwenden des Materials und Recken eines Bogens oder einer Folie, die durch ein Verfahren mit einer Breitschlitzdüse (T-die method) extrudiert wurde, in longitudinaler Richtung durch eine Geschwindigkeitsdifferenz zwischen einer Walze mit niedriger Geschwindigkeit und einer Walze mit hoher Geschwindigkeit mit einem 2- bis 6-fachen Reckverhältnis und in lateraler Richtung höchstens 1,8-fachen, unter Verwendung einer Spannvorrichtung, erhalten wird, und:

- wobei der aromatische Vinylkohlenwasserstoff in dem Blockcopolymer (I) Styrol ist, und wobei das konjugierte Dien in dem Blockcopolymer (I) 1,3-Butadien ist, und wobei das Kautschuk-modifizierte Styrol (V) ein hochschlagzähes Polystyrol (HIPS) ist.

2. MD-Schrumpffolie nach Anspruch 1, wobei das Block-Copolymer (I) ein Copolymer enthält, das wenigstens einen Random-Blockabschnitt aufweist, in dem das Verhältnis der eingesetzten Monomereinheiten des aromatischen Vinylkohlenwasserstoffs und des konjugierten Diens einheitlich ist und in dem das Verhältnis (Massenverhältnis) der Monomereinheiten des aromatischen Vinylkohlenwasserstoffs und den Monomereinheiten des konjugierten Diens von 80 zu 95/5 zu 20 beträgt.

**3.** MD-Schrumpffolie nach einem der Ansprüche 1 oder 2, wobei die MD-Schrumpffolie durch Recken eines Bogens oder einer Folie, die durch ein Verfahren mit einer Breitschlitzdüse (T-die method)extrudiert wurde, in longitudinaler Richtung durch eine Geschwindigkeitsdifferenz zwischen einer Walze mit niedriger Geschwindigkeit und einer Walze mit hoher Geschwindigkeit mit einem 2- bis 5-fachen Reckverhältnis erhalten wird.

**Revendications**

**1.** Film à retrait dans le sens machine (MD) obtenu à partir d'un matériau pour un film à retrait MD, dans lequel ledit matériau est une composition de résine comprenant un mélange de (a) au moins un composant représenté par (I) ci-dessous, et (b) au moins un composant représenté par (II) à (IV) ci-dessous, en un rapport en masse allant de moins de 100/0 à 50/50, et (c) un composant représenté par (V) en une quantité de 0,5 à 3 parties en masse pour 100 parties en masse du mélange, la distribution des masses moléculaires (Mw/Mn) de la composition de résine dépassant 1,2, et la teneur en diène conjugué des motifs monomères dans la composition de résine étant de 10 à 30 % en masse :

(I) un copolymère séquencé d'un hydrocarbure vinylaromatique et d'un diène conjugué,
(II) un polymère d'hydrocarbure vinylaromatique,
(III) un copolymère d'un hydrocarbure vinylaromatique et d'acide (méth)acrylique,
(IV) un copolymère d'un hydrocarbure vinylaromatique et d'un (méth)acrylate, et
(V) un polymère de styrène modifié par du caoutchouc ;

lequel film à retrait MD est obtenu par utilisation dudit matériau et étirage d'une feuille ou d'un film extrudé par un procédé avec une filière en T dans la direction longitudinale au moyen d'une différence de vitesse entre un rouleau à basse vitesse et un rouleau à grande vitesse avec un rapport d'allongement de 2 à 6 fois et dans la direction latérale au plus 1,8 fois par utilisation d'une rame ; et
dans lequel l'hydrocarbure vinylaromatique dans le copolymère séquencé (I) est le styrène, et
dans lequel le diène conjugué dans le copolymère séquencé (I) est le 1,3-butadiène, et
dans lequel le styrène modifié par du caoutchouc (V) est un polystyrène choc (HIPS).

**2.** Film à retrait MD selon la revendication 1, dans lequel le copolymère séquencé (I) contient un copolymère possédant au moins une section de bloc statistique dans laquelle le rapport constitutionnel des motifs monomères de l'hydrocarbure vinylaromatique et du diène conjugué est uniforme et dans laquelle le rapport (rapport en masse) des motifs monomères de l'hydrocarbure vinylaromatique et des motifs monomères du diène conjugué est de 80 à 95/5 à 20.

**3.** Film à retrait MD selon l'une quelconque des revendications 1 et 2, lequel film à retrait MD est obtenu par étirage de la feuille ou du film extrudé par le procédé avec une filière en T dans la direction longitudinale au moyen d'une différence de vitesse entre un rouleau à basse vitesse et un rouleau à grande vitesse avec un rapport d'allongement de 2 à 5 fois.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003285369 A
- EP 1333043 A
- US 6107411 A
- US 20050089702 A
- WO 2008013542 A